# EUROPEAN PATENT SPECIFICATION

(11) **EP 4 163 513 B1**
(45) Date of publication and mention of the grant of the patent: **27.08.2025**
(21) Application number: 22199906.3
(22) Date of filing: 05.10.2022
(51) Int. Cl.: F16D 65/18, F16D 65/853, F16D 55/40, B60T 1/06

(54) **BRAKING ASSEMBLY FOR A WORK VEHICLE AND WORK VEHICLE COMPRISING SUCH BRAKING ASSEMBLY**
BREMSANORDNUNG FÜR EIN ARBEITSFAHRZEUG UND ARBEITSFAHRZEUG MIT EINER SOLCHEN BREMSANORDNUNG
ENSEMBLE DE FREINAGE POUR UN VÉHICULE DE TRAVAIL ET VÉHICULE DE TRAVAIL COMPRENANT UN TEL ENSEMBLE DE FREINAGE

(30) Priority: 08.10.2021 IT 202100025850
(43) Date of publication of application: 12.04.2023
(73) Proprietor: CNH Industrial Italia S.p.A., 10156 Torino (IT)
(72) Inventor: Buffagni, Francesco, 41017 Ravarino (MO) (IT); Cantelli, Stefano, 41123 Lesignana (MO) (IT)
(74) Representative: CNH Industrial IP Department

(56) References cited:
- DE-A1- 2 331 315
- GB-A- 998 578
- US-A- 4 646 880
- US-A- 4 815 573
- US-A1- 2012 061 191
- US-B2- 10 151 366

## Description

### TECHNICAL FIELD

The present invention concerns a braking assembly for a work vehicle, preferably an agricultural vehicle, such as a tractor. The present invention also relates to a work vehicle comprising such braking assembly.

### BACKGROUND OF THE INVENTION

Agricultural vehicles are known comprising a main body and plurality of wheels adapted to rotate about respective rotational axes so as move the main body with respect to the ground. The agricultural vehicles further comprise a braking system adapted to slow down, stop or prevent the rotation of the wheels about their respective rotational axes.

As is well known, various braking technologies have been developed over time and, in particular, the agricultural vehicles usually employ one or more disc brakes.

In general terms, a disc brake comprises a brake disc, which is integral with one or more wheels, and brake pads, which are adapted to be pressed against the brake disc in order to generate friction and, consequently, a braking action. However, the energy dissipated by friction transforms into waste heat, which must be adequately dispersed. In fact, if the waste heat is not sufficiently dispersed, the brake disc could overheat and lose its friction properties. In addition, the service life of the disc brake could be severely affected.

In detail, when the brake disc is subjected to critical temperatures, the coefficient of friction of the disc decreases and thermal deformation may occur. Moreover, the friction material of the brake disc starts to degrade and some of its particles are teared away.

Further to the above, the thermal load conditions of the disc brakes are worsened during harsh breaking maneuvers, because the brake disc is affected by thermal cycles that are closely spaced in time.

In the light of the foregoing, disc brakes are generally cooled by means of oil lubrication as shown in US2012/061191A1, GB998578A, DE2331315A1, US4646880A. In detail, the brake disc is partially immersed in a sump, which contains a lubricant oil and is arranged below the brake disc. The brake disc is therefore cooled as a consequence of its rotational movement. More specifically, such rotational movement and the corresponding centrifugal forces cause oil to be splashed over the disc.

However, this cooling arrangement causes an asymmetrical cooling of the disc. In fact, the portion of the disc immersed in oil during rotation is subjected to significantly different thermal conditions than the non-immersed portion of the disc. As a result, the cooling of the disc and, in particular, of the surface comprising the friction material is not optimized.

In addition, the higher the level of oil contained in the sump, the greater the cooling of the brake disc. On the other hand, the greater the amount of oil, the greater the power losses during the rotation of the brake disc.

Other examples of lubrication systems are disclosed in EP-A2-0987459, EP-A2-1081401 and DE-A1-10300614.

Therefore, the need is felt to obtain a braking assembly capable of efficiently dispersing waste heat.

An aim of the present invention is to satisfy the above mentioned needs in a cost effective and optimized manner.

### SUMMARY OF THE INVENTION

The aforementioned aim is reached by a braking assembly and by a work vehicle, as claimed in the appended independent claims.

Preferred embodiments of the invention are realized according to the claims dependent or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a partial cross-section of an agricultural vehicle comprising a braking assembly according to the present invention;
- Figure 2 is an exploded view of the braking assembly of figure 1;
- Figure 3 is a rear view of the agricultural vehicle of Figure 1;
- Figure 4 is a detailed view of Figure 1 at an enlarged scale; and
- Figure 5 illustrates the same detailed view illustrated in Figure 4, in which the path of a fluid is schematically shown.

### DETAILED DESCRIPTION OF THE INVENTION

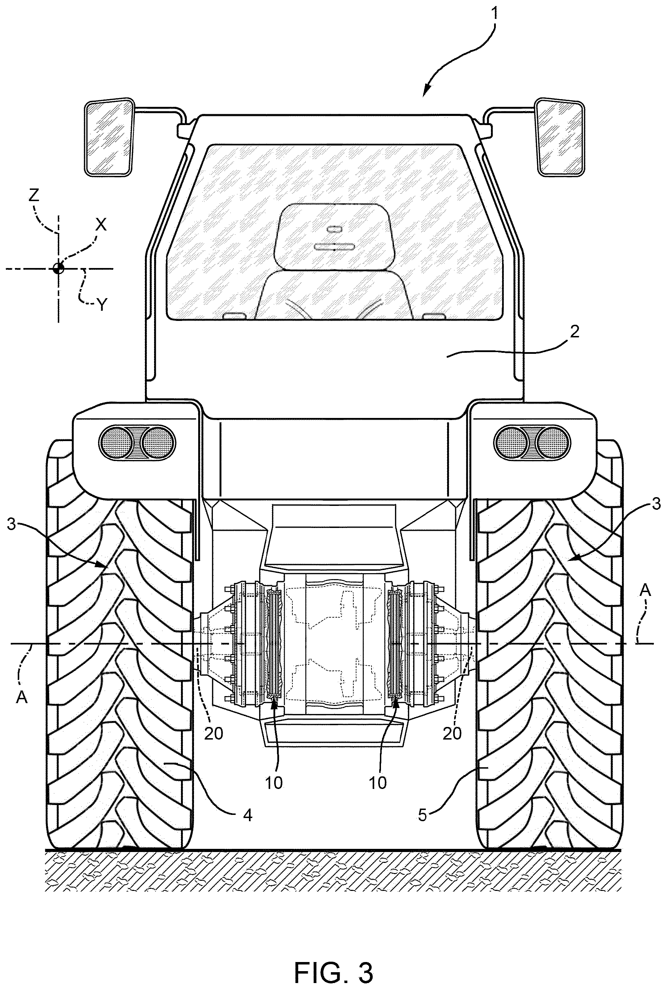

With reference to figure 3, numeral 1 indicates a work vehicle, in particular an agricultural vehicle such as a tractor. Vehicle 1 comprises a main body 2 and a plurality of wheels 3, which are rotatable about respective rotational axes A so as to move main body 2 with respect to the ground. Vehicle 1 further comprises at least one braking assembly 10, which is adapted to slow down, stop or prevent the rotation of one or more respective wheels 3 about their respective rotational axes A.

In the embodiment shown, vehicle 1 comprises two front wheels (not shown) and two rear wheels 4, 5 according to an advancement direction X of vehicle 1. In detail, figure 3 shows the two rear wheels 4, 5 of vehicle 1, which are mounted on a same axle 20 of vehicle 1, are rotatable about coincident rotational axes A and are spaced from each other along a direction Y transversal to advancement direction X. In further detail, vehicle 1 comprises two braking assemblies 10, which are adapted to brake rear wheel 4 and rear wheel 5, respectively.

For the sake of simplicity, in the following of the present description reference will be made to a single braking assembly 10 adapted to brake rear wheel 4, the description of a braking assembly 10 adapted to brake rear wheel 5 being identical.

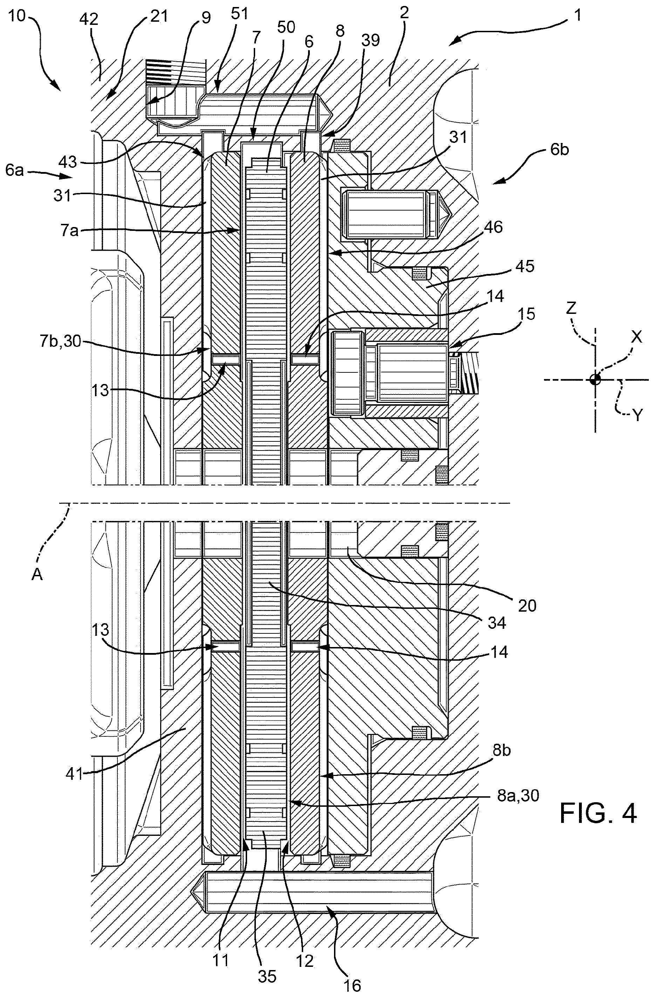

As illustrated in figure 4, braking assembly 10 comprises a brake disc 6, which is rotatable integrally with rear wheel 4 about rotational axis A and defines a first side 6a and a second side 6b, which are axially opposite to each other. In other words, first side 6a and second side 6b are opposite to each other with respect to a median plane of brake disc 6. More specifically, brake disc 6 is mounted on axle 20 coaxially to rotational axis A and rear wheel 4 is on first side 6a with respect to brake disc 6.

Braking assembly 10 further comprises two counter discs 7, 8, which are arranged in close proximity to brake disc 6 on first side 6a and second side 6b, respectively, and are rotationally fixed. Preferably, counter discs 7 and 8 are identical to each other.

Braking assembly 10 comprises not-shown actuation means, which are adapted to press counter disc 7 and/or counter disc 8 against brake disc 6, in order to obtain a braking action of rear wheel 4.

The actuation means may be actuated by a driver of vehicle 1. In detail, the actuation means are actuated by a brake command oil pressure, which is generated with a master cylinder pump inside the tractor cabin.

Furthermore, braking assembly 10 comprises a fluid inlet 9 for the inlet of a fluid. In detail, this fluid is a coolant fluid or a cooling lubricant fluid.

Counter disc 7 and brake disc 6 define first interstices 11 with each other; counter disc 8 and brake disc 6 define second interstices 12 with each other. In addition, counter disc 7 is formed with one or more holes 13, which are adapted to put in fluidic communication fluid inlet 9 with first interstices 11. Similarly, counter disc 8 is formed with one or more holes 14, which are adapted to put in fluidic communication fluid inlet 9 with second interstices 12.

As illustrated in figure 4, counter discs 7 and 8 are arranged coaxially to each other and to rotational axis A. In addition, preferably but not necessarily, each hole 13 of counter disc 7 is arranged coaxially to a respective hole 14 of counter disc 8.

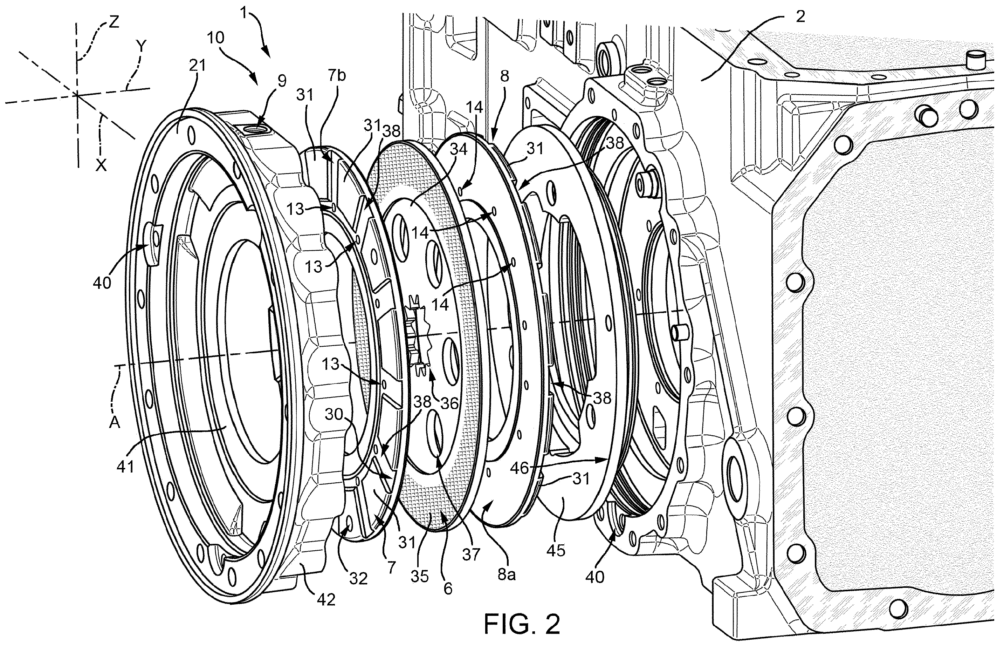

As illustrated in figure 2, each counter disc 7, 8 is shaped like an annulus radially extending between an inner radius and an outer radius with respect to rotational axis A. In addition, counter discs 7, 8 comprise respective first faces 7a, 8a, which are substantially flat and are adapted to face brake disc 6 and respective second faces 7b, 8b opposite to the first faces 7a, 8a with respect to respective median planes of counter discs 7 and 8. In detail, first interstices 11 are defined by a surface of brake disc on first side 6a and first face 7a; second interstices 12 are defined by a surface of brake disc 6 on second side 6b and first face 8a.

Each second face 7b, 8b comprises a surface 30, which is flat or substantially flat and a plurality of regions 31 protruding from surface 30 parallel to rotational axis A (figure 2) .

Regions 31 are shaped like quadrilaterals and extend for at least part of the radial extension of surface 30. In detail, each region 31 extends radially between a radius that is greater than the inner radius and the outer radius of the respective counter disc 7, 8. In further detail, each region 31 is shaped like an annulus sector.

Regions 31 of each counter disc 7, 8 are angularly spaced from one another. In addition, preferably, regions 31 are angularly equidistant from one another and are identical.

More specifically, since regions 31 of each counter disc 7, 8 are angularly spaced from one another by respective portions of surface 30, surface 30 defines a plurality of grooves 38 with respect to regions 31.

Preferably, surface 30 and regions 31 are formed in one piece.

As illustrated in figure 2, grooves 38 extend in a radial pattern about rotational axis A. In addition, two angularly consecutive grooves 38 of each counter disc 7, 8 are interposed by a respective region 31.

In the preferred embodiment shown, each counter disc 7, 8 comprises twelve regions 31, which are angularly spaced from one another by as many grooves 38. Moreover, since regions 31 are shaped like annulus sectors, the circumferential extension of each groove 38 decreases from the inner radius toward the outer radius of the relative counter disc 7, 8.

Furthermore, holes 13 and 14 are through holes and have respective axes that are parallel to one another and to rotational axes A.

Holes 13 are radially interposed between the inner radius and regions 31 of counter disc 7. Similarly, holes 14 are radially interposed between the inner radius and regions 31 of counter disc 8. In addition, preferably, counter discs 7 and 8 comprise as many respective holes 13, 14 as the number of respective regions 31. More specifically, each hole 13, 14 is arranged circumferentially at the midpoint of a respective region 31.

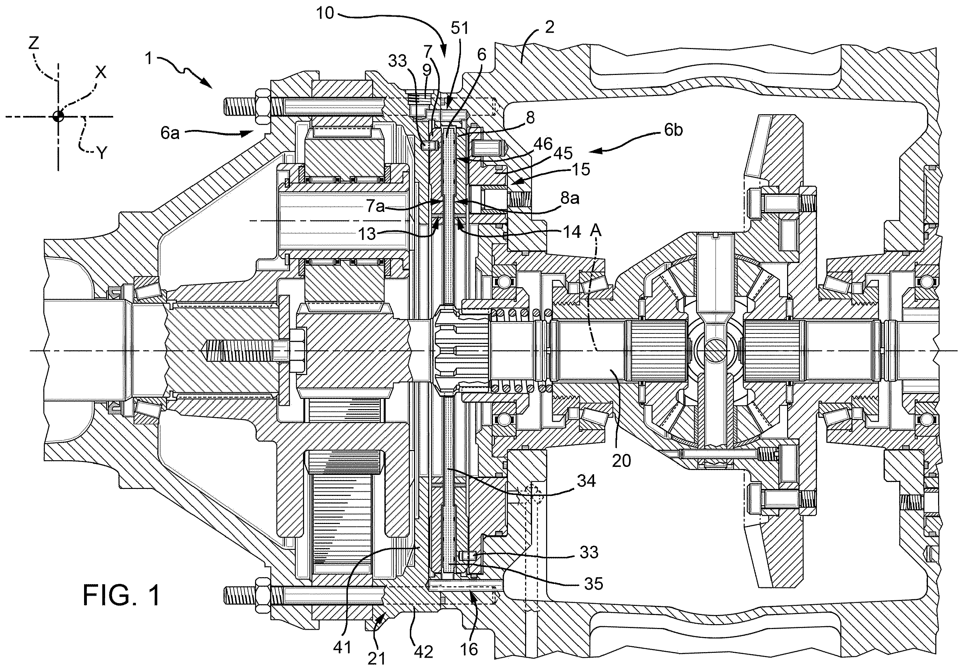

Furthermore, each counter disc 7, 8 comprises a plurality of anti-rotational pin holes 32, which are engaged by respective anti-rotational pins 33 (figures 1 and 2). In detail, anti-rotational pin holes 32 and anti-rotational pins 33 prevent counter discs 7, 8 from rotating as a consequence of the rotation of brake disc 6 about rotational axis A.

In the embodiment shown, each counter disc 7, 8 comprises three anti-rotational pin holes 32, which are equally angularly spaced from one another. In addition, anti-rotational pin holes 32 are blind holes and have respective axes that are parallel to rotational axis A.

The radial extension of counter discs 7 and 8 with respect to rotational axis A is substantially equal to the radial extension of brake disc 6. Preferably, the radial extension of counter discs 7 and 8 is slightly greater than the radial extension of brake disc 6.

As shown in figure 2, brake disc 6 is shaped like a circular disc and comprises a central portion 34 and a radially external portion 35 surrounding central portion 34.

The external surface of radially external portion 35 comprises a friction material and is shaped like an annulus. Central portion 34 comprises, in turn, a hole 36, which allows brake disc 6 to be mounted to axle 20 and a plurality of lightening holes 37. In detail, hole 36 is formed at the center of central portion 34 and lightening holes 37 are angularly equidistant from one another about hole 36.

Furthermore, the axial extension of radially external portion 35 is greater than the axial extension of central portion 34. On the contrary, the extension of radially external portion 35 radially with respect to rotational axis A is preferably lower than the radial extension of central portion 34.

Furthermore, braking assembly 10 comprises a piston plate 45, which is arranged opposite to brake disc 6 with respect to counter disc 8. Piston plate 45 is operatively connected to the not-shown actuation means and is adapted to press counter disc 7 and/or counter disc 8 against brake disc 6, in order to obtain the braking action of rear wheel 4. Piston plate 45 is slidable parallel to rotational axis A with respect to main body 2 as a consequence of the activation of the actuation means.

In addition, piston plate 45 is shaped like an annulus and comprises a surface 46, which is arranged so as to face surface 30 of counter disc 8. In detail, surface 46 and surface 30 of counter disc 8 (and, in particular, grooves 38 of counter disc 8) define at least part of third interstices 39.

Moreover, anti-rotational pins 33 of counter disc 8 are adapted to engage both anti-rotational pin holes 32 of counter disc 8 and respective holes formed in piston plate 45 (figure 1).

Braking assembly 10 further comprises a limiting device 15, which is adapted to limit the movement of piston plate 45 within a specific stroke parallel to rotational axis A. In detail, limiting device 15 is adapted to limit the movement of piston plate 458 in the direction oriented from counter disc 7 to counter disc 8. This allows to control the stroke of piston plate 45 parallel to axis A in case of wear of brake disc 6.Braking assembly 10 further comprises a cover 21, which is arranged coaxially to rotational axis A and opposite to brake disc 6 with respect to counter disc 7.

Cover 21 comprises a central portion 41 and a radially external portion 42 surrounding central portion 41 and having an axial extension parallel to rotational axis A. Cover 21 is shaped like an annulus having a radial extension greater than the radial extension of brake disc 6 and counter discs 7, 8 and is adapted to be crossed by axle 20.

In particular, central portion 41 and external portion 42 form a single piece.

Furthermore, cover 21 is adapted to be fixed to frame 2 at radially external portion 42 by connecting means 40, such as threaded connecting means (figure 2). As illustrated in figure 1, when cover 21 is fixed to frame 2, cover 21 and frame 2 define a cavity 50, which is adapted to house at least brake disc 6, counter discs 7 and 8 and piston plate 45.

Counter disc 7 is fixed to cover 21. More specifically, cover 21 is at least partially in contact with counter disc 7 and, in particular, with regions 31. In addition, cover 21 and surface 30 of counter disc 7 (and, in particular, grooves 38) define at least part of fourth interstices 43.

Moreover, anti-rotational pins 33 of counter disc 7 are adapted to engage both anti-rotational pin holes 32 of counter disc 7 and respective holes formed in cover 21 (figure 1).

In particular, fluid inlet 9 comprises an opening formed at cover 21 and is fluidly connected to cavity 50. More specifically, fluid inlet 9 is arranged at radially external portion 42 and is fluidly connected to cavity 50 by means of one or more ducts 51.

As illustrated in figure 1, ducts 51 are formed partly inside cover 21 and partly inside main body 2. In addition, fluid inlet 9 is arranged above brake disc 6 and counter discs 7, 8 according to a vertical direction Z, which is transversal to both advancement direction X and direction Y and is parallel to the gravitational acceleration vector.

In addition, ducts 51 are in fluidic communication with third and fourth interstices 39, 43. Third interstices 39, in turn, are in fluidic communication with second interstices 12 through holes 14 and fourth interstices 43 are in fluidic communication with first interstices 11 through holes 13 (figure 2).

Furthermore, braking assembly 10 comprises a fluid outlet 16 for the outlet of the fluid (figure 4). Preferably, fluid outlet 16 is arranged below brake disc 6 and counter discs 7, 8 according to vertical direction Z.

The fluid is forced to circulate between fluid inlet 9 and fluid outlet 16 by means of a pump of vehicle 1, which is known per se and is not described further in detail. The pump may be, by way of example, a reciprocating pump or a turbopump.

Brake disc 6 and counter discs 7, 8 are partially immersed in the fluid. In particular, the fluid in which brake disc 6 and counter discs 7, 8 are immersed is the fluid that has passed through first and second interstices 11, 12 and has been collected in the lowermost part of cavity 50 according to vertical direction Z. In other words, because of gravity, the fluid passing through first and second interstices 11, 12 is accumulated in the lowermost part of cavity 50, which acts as a sump. The collected fluid has a fluid level and is adapted to be splashed over brake disc 6 because of the rotation thereof about rotational axis A. Therefore, brake disc 6 is cooled also by means of passive cooling.

The operation of the braking assembly 10 according to the present invention and described as above is the following. In particular, reference will be made to the braking assembly 10 adapted to brake rear wheel 4, the operation of braking assembly 10 adapted to brake rear wheel 5 being identical.

In use, the actuation means are activated so as to press counter disc 7 and/or counter disc 8 against brake disc 6, and to obtain the braking action of rear wheel 4. During the braking action, the fluid is forced to circulate between fluid inlet 9 and fluid outlet 16 in order to carry out the forced cooling of brake disc 6. Alternatively, the fluid may be continuously forced to circulate between fluid inlet 9 and fluid outlet 16 independently of the braking action and, in particular, even after the braking action has stopped.

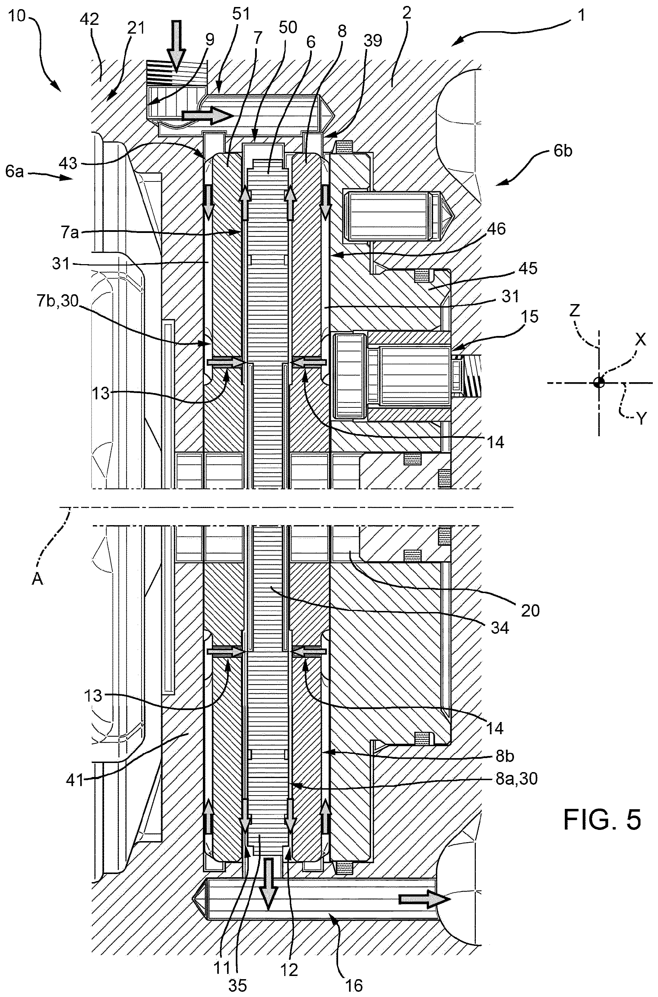

In detail, the fluid is input into cavity 50 through fluid inlet 9, which is arranged above brake disc 6 and counter discs 7, 8 (figure 5).

In further detail, the input fluid flows through ducts 51 to third and fourth interstices 39, 43. In detail, the fluid flows across grooves 38 of counter disc 7 from the outer radius toward the inner radius thereof and reaches holes 13. Simultaneously, the fluid flows across grooves 38 of counter disc 8 from the outer radius toward the inner radius thereof and reaches holes 14.

Subsequently, as illustrated in figure 5, the fluid flows through holes 13 and 14 to first and second interstices 11, 12. Therefore, the fluid is put into direct contact with the external surfaces of brake disc 6 and, in particular, with radially external portion 35. As a consequence, the waste heat generated during the braking action of braking assembly 10 is transmitted to the fluid and the fluid cools the entire brake disc 6.

In conclusion, the fluid entering from fluid inlet 9 and passing through first and second interstices 11, 12 carries out a forced cooling of brake disc 6.

Subsequently, as a result of the rotation of brake disc 6 about rotational axis A and the corresponding centrifugal forces, the fluid is transported radially outwards and tends to accumulate in the lowermost part of cavity 50, because of gravity. The fluid is then output through fluid outlet 16 (figure 5). As a consequence, the flow of waste heat dissipated from braking assembly 10 is opposite to the flow of the fluid during the forced cooling. In other words, the flow of the fluid is in counterflow with respect to the flow of waste heat.

Furthermore, since brake disc 6 is partially immersed in the fluid collected in the lowermost part of cavity, such fluid is splashed over brake disc 6 as a result of the rotation thereof about rotational axis A.

In view of the foregoing, the advantages of braking assembly 10 and work vehicle 1 according to the invention are apparent.

In particular, since braking assembly 10 comprises counter discs 7 and 8 and the fluid is adapted to flow in first and second interstices 11, 12, waste heat can be efficiently dispersed. In fact, the fluid is specifically brought in contact with radially external portion 35 on both first and second sides 6a, 6b and a uniform cooling of brake disc 6 is obtained. In other words, brake disc 6 is cooled at two opposite thermal exchange surfaces. Accordingly, it has been observed that the service life of braking assembly 10 is considerably extended and the brake performances are significantly improved.

In addition, since the fluid is adapted to flow across third and fourth interstices and through holes 13, 14, counter discs 7, 8 are also cooled down. In detail, counter discs 7, 8 are cooled both at external faces 7a, 7b; 8a, 8b and internally. As a result, brake disc 6 is in proximity to efficiently cooled down components.

Brake disc 6 is partially immersed in the fluid collected in the lowermost portion of cavity 50. Accordingly, the fluid splashed over the surfaces of brake disc 6 because of the rotation of brake disc 6 contributes to disperse the waste heat by virtue of passive cooling. However, since the waste heat is mainly dispersed by forced cooling, the level of the fluid in which brake disc 6 is immersed may be set lower than the fluid level of the known disc brakes discussed in the introductory portion of the present description. As a result, the power losses due to the rotation of brake disc 6 immersed in the fluid are very low.

Moreover, since the fluid adapted to contact brake disc 6 may be a cooling lubricant fluid, braking assembly 10 can be effectively lubricated while being cooled.

Counter disc 7 and 8 are identical to each other. Accordingly, the manufacturing costs of braking assembly 10 can be advantageously kept low.

It is clear that modifications can be made to the described braking assembly 10 and work vehicle 1 which do not extend beyond the scope of protection defined by the claims. In particular, braking assembly 10 might comprise more than one fluid inlet 9 and/or more than one fluid outlet 16.

Furthermore, counter disks 7 and 8 could also be respectively integrated in central portion 41 and piston plate 45. Accordingly, the number of components of braking assembly 10 can be advantageously reduced.

## Claims

1. Braking assembly (10) for a work vehicle (1) comprising:
- a brake disc (6), which is rotatable integrally with at least one wheel (3, 4, 5) of said work vehicle (1) about a rotational axis (A);
- a first counter disc (7), which is arranged on a first side (6a) of said brake disc (6) along said rotational axis (A) and is rotationally fixed;
- a second counter disc (8), which is arranged on a second side (6b) of said brake disc (6) opposite to said first side (6a) along said rotational axis (A) and is rotationally fixed;
- at least one fluid inlet (9) for the inlet of a fluid;
said fluid being a cooling lubricant fluid; and
- actuation means, which are adapted to press said first and/or second counter discs (7, 8) against said brake disc (6);
said first and second counter discs (7, 8) defining respectively first and second interstices (11, 12) with said brake disc (6); said first and second counter discs (7, 8) being respectively formed with at least one first hole (13) and at least one second hole (14), which are respectively adapted to put in fluidic communication said at least one fluid inlet (9) with said first interstices (11) and said second interstices (12);
said braking assembly is **characterized in that** it further comprises:
- a cover (21), which is opposite to said brake disc (6) with respect to said first counter disc (7) and is rotationally fixed; and
- a piston plate (45), which is opposite to said brake disc (6) with respect to said second counter disc (8) and is operatively connected to said actuation means;
said piston plate (45) defining third interstices (39) with said second counter disc (8); said third interstices (39) being fluidly connected to said fluid inlet (9) and to said second interstices (12) through said at least one second hole (14) ;
said cover (21) defining fourth interstices (43) with said first counter disc (7); said fourth interstices (43) being fluidly connected to said fluid inlet (9) and to said first interstices (11) through said at least one first hole (13).

2. Braking assembly according to claim 1, wherein said fluid inlet (9) comprises an opening arranged at said cover (21) and is fluidly connected to said third and fourth interstices (39, 43) by means of one or more ducts (51).

3. Braking assembly according to any one of claims 1 or 2, wherein said first and second counter discs (7, 8) comprise:
- respective first faces (7a, 8a), which are adapted to face said brake disc (6) respectively on said first side (6a) and said second side (6b); and
- respective second faces (7b, 8b), which are each opposite to a respective said first face (7a, 8a);
each said second face (7b, 8b) comprising a surface (30), which is flat, and a plurality of regions (31) protruding from said surface (30) parallel to said rotational axis (A);
said regions (31) of each said second face (7b, 8b) being angularly spaced from one another with respect to said rotational axis (A) and defining a plurality of grooves (38);
said grooves (38) of said first counter disc (7) and said cover (21) defining at least part of said fourth interstices (43); said grooves (38) of said second counter disc (8) and said piston plate (45) defining at least part of said third interstices (39).

4. Braking assembly according to claim 3, wherein said grooves (38) of both first and second counter discs (7, 8) are arranged in a radial pattern with respect to said rotational axis (A).

5. Braking assembly according to any one of the foregoing claims, further comprising at least one fluid outlet (16) for the outlet of said fluid;
said fluid inlet (9) and said fluid outlet (16) being arranged respectively above and below said brake disc (6) with respect to a vertical direction (Z), which is parallel to the gravitational acceleration vector.

6. Braking assembly according to any one of the foregoing claims, wherein said first counter disc (7) and said second counter disc (8) are identical.

7. Braking assembly according to any one of the foregoing claims, wherein said brake disc (6) is partially immersed in said fluid.

8. A work vehicle (1) comprising:
- a main body (2);
- a plurality of wheels (3, 4, 5), which are adapted to move said main body (2) with respect to the ground; and
- at least one braking assembly (10) according to any one of the foregoing claims, which is adapted to brake, in use, one or more of said plurality of wheels (3, 4, 5).

9. The work vehicle according to claim 8, further comprising a pump, which is adapted to circulate a fluid between a fluid inlet (9) and a fluid outlet (16) of said at least one braking assembly (10).

## Patentansprüche

1. Bremsanordnung (10) für ein Nutzfahrzeug (1) umfassend:
eine Bremsscheibe (6), die integral mit mindestens einem Rad (3, 4, 5) des Nutzfahrzeugs (1) um eine Rotationsachse (A) drehbar ist;
eine erste Gegenscheibe (7), die entlang der Rotationsachse (A) auf einer ersten Seite (6a) der Bremsscheibe (6) angeordnet und drehfest ist;
eine zweite Gegenscheibe (8), die entlang der Rotationsachse (A) auf einer zweiten Seite (6b) der Bremsscheibe (6), die der ersten Seite (6a) gegenüberliegt, angeordnet und drehfest ist;
mindestens einen Fluideinlass (9) zum Einleiten eines Fluids, wobei das Fluid ein Kühlschmierstoff ist; und
Betätigungsmittel, die dazu eingerichtet sind, die erste und/oder zweite Gegenscheibe (7, 8) gegen die Bremsscheibe (6) zu pressen;
wobei die erste und die zweite Gegenscheibe (7, 8) mit der Bremsscheibe (6) einen ersten bzw. einen zweiten Zwischenraum (11, 12) definieren; wobei die erste und die zweite Gegenscheibe (7, 8) jeweils mit mindestens einer ersten Öffnung (13) bzw. mit mindestens einer zweiten Öffnung (14) versehen sind, die jeweils dazu eingerichtet sind, den mindestens einen Fluideinlass (9) fluidisch mit dem ersten Zwischenraum (11) bzw. mit dem zweiten Zwischenraum (12) zu verbinden;
wobei die Bremsanordnung **dadurch gekennzeichnet ist, dass** sie weiterhin umfasst:
eine Abdeckung (21), die der Bremsscheibe (6) bezüglich der ersten Gegenscheibe (7) gegenüberliegend angeordnet und drehfest ist; und
eine Kolbenplatte (45), die der Bremsscheibe (6) bezüglich der zweiten Gegenscheibe (8) gegenüberliegend angeordnet und wirkend mit den Betätigungsmitteln verbunden ist;
wobei die Kolbenplatte (45) mit der zweiten Gegenscheibe (8) dritte Zwischenräume (39) definiert; wobei die dritten Zwischenräume (39) über die mindestens eine zweite Öffnung (14) fluidisch mit dem Fluideinlass (9) und mit den zweiten Zwischenräumen (12) verbunden sind;
wobei die Abdeckung (21) mit der ersten Gegenscheibe (7) vierte Zwischenräume (43) definiert; wobei die vierten Zwischenräume (43) über die mindestens eine erste Öffnung (13) fluidisch mit dem Fluideinlass (9) und mit den ersten Zwischenräumen (11) verbunden sind.

2. Bremsanordnung nach Anspruch 1, wobei der Fluideinlass (9) eine an der Abdeckung (21) angeordnete Öffnung umfasst und mittels eines oder mehrerer Kanäle (51) fluidisch mit den dritten und vierten Zwischenräumen (39, 43) verbunden ist.

3. Bremsanordnung nach einem der Ansprüche 1 und 2, wobei die erste und die zweite Gegenscheibe (7, 8) umfassen:
jeweilige erste Flächen (7a, 8a), die dazu eingerichtet sind, der Bremsscheibe (6) auf der ersten Seite (6a) bzw. auf der zweiten Seite (6b) zugewandt zu sein; und
jeweilige zweite Flächen (7b, 8b), die jeweils der jeweiligen ersten Fläche (7a, 8a) gegenüberliegen;
wobei jede zweite Fläche (7b, 8b) eine Oberfläche (30), die eben ist, und eine Mehrzahl von Bereichen (31), die von der Oberfläche (30) parallel zur Rotationsachse (A) vorstehen, umfasst;
wobei die Bereiche (31) jeder zweiten Fläche (7b, 8b) bezüglich der Rotationsachse (A) im Winkelabstand zueinander angeordnet sind und eine Mehrzahl von Nuten (38) definieren;
wobei die Nuten (38) der ersten Gegenscheibe (7) und der Abdeckung (21) zumindest einen Teil der vierten Zwischenräume (43) definieren; wobei die Nuten (38) der zweiten Gegenscheibe (8) und der Kolbenplatte (45) zumindest einen Teil der dritten Zwischenräume (39) definieren.

4. Bremsanordnung nach Anspruch 3, wobei die Nuten (38) sowohl der ersten als auch der zweiten Gegenscheibe (7, 8) in einem radialen Muster relativ zur Rotationsachse (A) angeordnet sind.

5. Bremsanordnung nach einem der vorhergehenden Ansprüche, weiterhin umfassend mindestens einen Fluidauslass (16) zum Ausleiten des Fluids;
wobei der Fluideinlass (9) und der Fluidauslass (16) oberhalb bzw. unterhalb der Bremsscheibe (6) in Bezug auf eine Vertikalrichtung (Z), die parallel zum Gravitationsbeschleunigungsvektor verläuft, angeordnet sind.

6. Bremsanordnung nach einem der vorhergehenden Ansprüche, wobei die erste Gegenscheibe (7) und die zweite Gegenscheibe (8) identisch sind.

7. Bremsanordnung nach einem der vorhergehenden Ansprüche, wobei die Bremsscheibe (6) teilweise in das Fluid eingetaucht ist.

8. Nutzfahrzeug (1) umfassend:
einen Hauptaufbau (2);
eine Mehrzahl von Rädern (3, 4, 5), die dazu eingerichtet sind, den Hauptaufbau (2) relativ zum Boden zu bewegen; und
mindestens eine Bremsanordnung (10) nach einem der vorhergehenden Ansprüche, die dazu eingerichtet ist, im Betrieb eines oder mehrere der Räder (3, 4, 5) zu bremsen.

9. Nutzfahrzeug nach Anspruch 8, weiterhin umfassend eine Pumpe, die dazu eingerichtet ist, ein Fluid zwischen einem Fluideinlass (9) und einem Fluidauslass (16) der mindestens einen Bremsanordnung (10) zu zirkulieren.

## Revendications

1. Ensemble de freinage (10) pour un véhicule de travail (1) comprenant :
- un disque de frein (6), qui peut tourner intégralement avec au moins une roue (3, 4, 5) dudit véhicule de travail (1) autour d'un axe de rotation (A) ;
- un premier contre disque (7), qui est installé sur un premier côté (6a) dudit disque de frein (6) le long dudit axe de rotation (A) et qui est fixé en rotation ;
- un second contre disque (8), qui est installé sur un second côté (6b) dudit disque de frein (6) opposé audit premier côté (6a) le long dudit axe de rotation (A) et qui est fixé en rotation ;
- au moins un orifice d'entrée de fluide (9) pour l'admission d'un fluide ; ledit fluide étant un liquide de refroidissement lubrifiant ; et
- des moyens d'actionnement, qui sont adaptés pour presser lesdits premier et/ou second contre disques (7, 8) contre ledit disque de frein (6) ;
ledit premier et ledit second contre disque (7, 8) définissant respectivement des premiers et des deuxièmes espaces interstitiels (11, 12) avec ledit disque de frein (6) ; ledit premier et ledit second contre disque (7, 8) étant respectivement formés d'au moins un premier orifice (13) et d'au moins un second orifice (14), qui sont respectivement adaptés pour mettre en communication fluidique ledit au moins un orifice d'entrée de fluide (9) avec lesdits premiers espaces interstitiels (11) et lesdits deuxièmes espaces interstitiels (12) ;
ledit ensemble de freinage est **caractérisé en ce qu'**il comprend en outre :
- un carter (21), qui est opposé audit disque de frein (6) par rapport audit premier contre disque (7) et qui est fixé en rotation ; et
- une plaque de piston (45), qui est opposée audit disque de frein (6) par rapport audit second contre disque (8) et qui est raccordé de manière opérationnelle auxdits moyens d'actionnement ;
ladite plaque de piston (45) définissant des troisièmes espaces interstitiels (39) avec ledit second contre disque (8) ; lesdits troisièmes espaces interstitiels (39) étant raccordés fluidiquement audit orifice d'entrée de fluide (9) et auxdits deuxièmes espaces interstitiels (12) par ledit au moins un second orifice (14) ;
ledit carter (21) définissant les quatrièmes espaces interstitiels (43) avec ledit premier contre disque (7) ; lesdits quatrièmes espaces interstitiels (43) étant raccordés fluidiquement audit orifice d'entrée de fluide (9) et auxdits premiers espaces interstitiels (11) par ledit au moins un premier orifice (13).

2. Ensemble de freinage selon la revendication 1, dans lequel ledit orifice d'entrée de fluide (9) comprend une ouverture agencée au niveau dudit carter (21) et est raccordé fluidiquement auxdits troisièmes et quatrièmes espaces interstitiels (39, 43) par le biais d'un ou de plusieurs conduits (51).

3. Ensemble de freinage selon l'une quelconque des revendications 1 ou 2, dans lequel ledit premier et ledit second contre disque (7, 8) comprennent :
- de premières faces respectives (7a, 8a), qui sont adaptées pour faire face audit disque de frein (6) respectivement sur ledit premier côté (6a) et ledit second côté (6b) ; et
- de secondes faces respectives (7b, 8b), qui sont chacune opposées à ladite première face (7a, 8a) ;
chacune de ces secondes faces (7b, 8b) comprenant une surface (30) qui est plane et une pluralité de zones (31) faisant saillie de cette surface (30) parallèlement audit axe de rotation (A) ;
lesdites zones (31) de chacune de ces secondes faces (7b, 8b) étant espacées de manière angulaire les unes des autres par rapport audit axe de rotation (A) et définissant une pluralité de rainures (38) ;
lesdites rainures (38) dudit premier contre disque (7) et ledit carter (21) définissant au moins une partie desdits quatrièmes espaces interstitiels (43) ; lesdites rainures (38) dudit second contre disque (8) et ladite plaque de piston (45) définissant au moins une partie desdits troisièmes espaces interstitiels (39).

4. Ensemble de freinage selon la revendication 3, dans lequel lesdites rainures (38) du premier et du second contre disque (7, 8) sont agencées de manière radiale par rapport audit axe de rotation (A).

5. Ensemble de freinage selon l'une quelconque des revendications précédentes, comprenant en outre au moins un orifice de sortie de fluide (16) pour la sortie dudit fluide ;
ledit orifice d'entrée de fluide (9) et ledit orifice de sortie de fluide (16) étant installés respectivement au-dessus et en dessous dudit disque de frein (6) par rapport à une direction verticale (Z), qui est parallèle au vecteur d'accélération gravitationnelle.

6. Ensemble de freinage selon l'une quelconque des revendications précédentes, dans lequel ledit premier contre disque (7) et ledit second contre disque (8) sont identiques.

7. Ensemble de freinage selon l'une quelconque des revendications précédentes, dans lequel ledit disque de frein (6) est partiellement immergé dans ledit fluide.

8. Un véhicule de travail (1) comprenant :
- un corps principal (2) ;
- une pluralité de roues (3, 4, 5), qui sont réglées pour déplacer ledit corps principal (2) par rapport au sol ; et
- au moins un ensemble de freinage (10) selon l'une quelconque des revendications précédentes, qui est réglé pour freiner, en cours d'utilisation, une ou plusieurs roues parmi ladite pluralité de roues (3, 4, 5).

9. Le véhicule de travail selon la revendication 8, comprenant en outre une pompe, qui est réglée pour faire circuler un fluide entre un orifice d'entrée de fluide (9) et un orifice de sortie de fluide (16) dudit au moins un ensemble de freinage (10).
